# EUROPEAN PATENT APPLICATION

(11) **EP 4 726 862 A1**
(43) Date of publication of application: **15.04.2026**
(21) Application number: 25192132.6
(22) Date of filing: 28.07.2025
(51) Int. Cl.: H01M 10/658, H01M 50/291, H01M 50/293, H01M 50/507, H01M 50/204

(54) **BATTERY MODULE**

(30) Priority: 11.10.2024 KR 20240138683
(71) Applicant: SAMSUNG SDI CO., LTD., Yongin-si, Gyeonggi-do 17084 (KR)
(72) Inventor: YANG, Jongwoon, 17084 Yongin-si (KR)
(74) Representative: Marks & Clerk LLP

(57) **Abstract**

A battery module includes a plurality of battery cells, busbars electrically connecting the plurality of battery cells, a holder positioned on the plurality of battery cells and accommodating the bus bars, and a cover portion positioned on the holder and covering the bus bars, wherein the cover portion includes a first layer, a second layer positioned on the first layer, and a third layer positioned on the second layer, and the second layer includes a material different from those of the first layer and the third layer.

## Description

### FIELD

The present disclosure relates to a battery module.

### BACKGROUND

Secondary batteries are batteries that may be charged and discharged, unlike primary batteries that cannot be recharged. Low-capacity battery cells have been used in small, portable electronic devices, such as smartphones, feature phones, laptop computers, digital cameras, and camcorders, while large-capacity battery cells have been widely used as power sources for driving motors in hybrid vehicles, electric vehicles, etc., and as batteries for power storage. Battery cells include an electrode assembly including a positive electrode and a negative electrode, a case accommodating the electrode assembly, and electrode terminals connected to the electrode assembly.

Meanwhile, large-capacity battery cells may be used as battery modules in which a large number of battery cells are connected in series and/or parallel to provide high energy density (e.g., for driving motors in hybrid vehicles).

### SUMMARY

Embodiments of the present disclosure provide a battery module with improved stability. However, the technical problems to be solved by the present disclosure are not limited to the problems described herein, and other problems not mentioned may be clearly understood by those skilled in the art from the description of the disclosure described herein.

According to an aspect of the disclosure, there is provided a battery module including a plurality of battery cells, busbars electrically connecting the plurality of battery cells, a holder positioned on the plurality of battery cells and accommodating the bus bars, and a cover portion positioned on the holder and covering the bus bars, wherein the cover portion includes a first layer, a second layer positioned on the first layer, and a third layer positioned on the second layer, and the second layer includes a material different from those of the first layer and the third layer.

The first layer and the third layer may include at least one of mica, ceramic fiber, glass fiber, or silica fiber.

The second layer may include at least one of aerogel, polyurethane foam, or phenolic foam.

At least one of the aerogel, the polyurethane foam, or the phenol foam may be included in the second layer in an amount of 60 % to 90% weight.

The battery module may further include an upper cover covering the cover portion, wherein the cover portion is coupled to the upper cover.

Upper surfaces of the bus bars may be spaced apart from a lower surface of the cover portion by a distance.

The cover portion may further include protrusions positioned to protrude toward the plurality of battery cells.

Each of the protrusions may be positioned between respective adjacent bus bars among the bus bars.

A length of the protrusion may be 2 mm to 4 mm.

Thicknesses of the first layer and the third layer may be 0.1 mm to 0.3 mm, and a thickness of the second layer may be 0.5 mm to 2 mm.

According to another aspect of the disclosure, there is provided a battery module including a plurality of battery cells, busbars electrically connecting the plurality of battery cells, and a cover portion covering the bus bars, wherein the cover portion includes a first layer, a second layer positioned on the first layer, and a third layer positioned on the second layer, and the cover portion includes protrusions positioned protruding toward the plurality of battery cells and between the bus bars.

A lower surface of the protrusion may be positioned lower than upper surfaces of the bus bars.

A length of each of the protrusions may be 2 mm to 4 mm.

The protrusions may include at least one of flame retardant silicone, ethylene propylene diene monomer (EPDM), fluorosilicone, polytetrafluoroethylene (PTFE), para-aramid fiber, fluoroelastomer (FKM), polyvinyl chloride (PVC), or polyurethane.

Thicknesses of the first layer and the third layer may each be 0.1 mm to 0.3 mm, and a thickness of the second layer may be 0.5 mm to 2 mm.

The first layer and the third layer may include at least one of mica, ceramic fiber, glass fiber, or silica fiber.

The second layer may include at least one of aerogel, polyurethane foam, or phenolic foam.

At least one of the aerogel, the polyurethane foam, or the phenol foam may be included in the second layer in an amount of 60% to 90% weight.

A width of each of the protrusions may be greater than a width of each of the bus bars. an upper surface of each of the bus bars may be spaced apart from a lower surface of the cover portion by a distance, and a distance between the upper surface of each of the bus bars and the lower surface of the cover portion may be 0.1 mm to 5 mm.

At least some of the above and other features of the invention are set out in the claims.

### BRIEF DESCRIPTION OF THE DRAWINGS

The following drawings appended to the specification illustrate embodiments of the present disclosure to serve a technical concept of the present disclosure to be understood easily together with detailed descriptions of the present disclosure, so the present disclosure should not be construed as being limited to the matters illustrated in the accompanying drawings.
FIG. 1 is an exploded perspective view schematically illustrating an example of a battery module according to an embodiment of the present disclosure.
FIG. 2 is a perspective view schematically illustrating an example of a battery cell of the battery module of FIG. 1.
FIG. 3 is a cross-sectional view schematically illustrating an example of a cross-section taken along line the III-III' of FIG. 2.
FIG. 4 is a cross-sectional view schematically illustrating an example of the arrangement of a cover portion and a bus bar of the battery module of FIG. 1.
FIG. 5 is a cross-sectional view schematically illustrating an example of a cover portion of the battery module of FIG. 1.
FIG. 6 is a cross-sectional view schematically illustrating another example of the arrangement of the cover portion and the bus bar of the battery module of FIG. 1.

### DETAILED DESCRIPTION

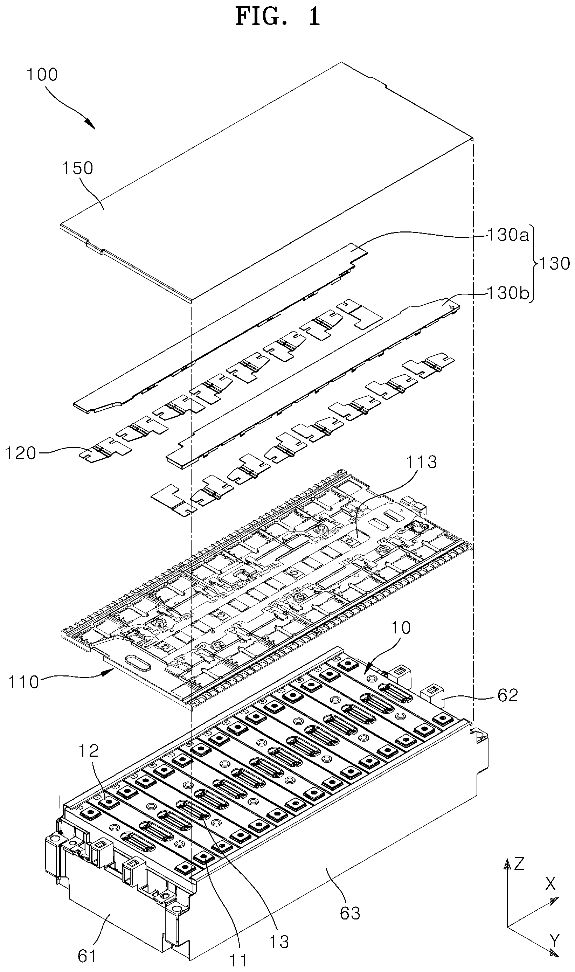

FIG. 1 is an exploded perspective view schematically illustrating an example of a battery module according to an embodiment of the present disclosure.

Referring to FIG. 1, a battery module 100 according to an embodiment of the present disclosure may include a plurality of battery cells 10 arranged in one direction X and bus bars 120 electrically connecting one battery cell of the plurality of battery cells 10 to another battery cell of the plurality of battery cells 10 adjacent thereto.

Each of the battery cells 10 may include a first terminal 11 and a second terminal 12 electrically connected through a bus bar 120 on one side and a vent 13 for discharging gas that occurs internally within the battery cell 10.

The first terminal 11 may be either a positive terminal or a negative terminal. If the first terminal 11 is a positive terminal, the second terminal 12 may be a negative terminal, and conversely, if the first terminal 11 is a negative terminal, the second terminal 12 may be a positive terminal. That is, the first terminal 11 and the second terminal 12 are formed to have different electrical polarities and are not limited to any particular polarity.

The first terminal 11 of one battery cell 10 may be electrically connected to the second terminal 12 of another adjacent battery cell 10 through the bus bar 120, and the second terminal 12 of one battery cell 10 may be electrically connected to the first terminal 11 of another adjacent battery cell 10 through another bus bar 120. Meanwhile, although FIG. 1 illustrates a serial connection, the present disclosure is not limited to such a structure and, of course, various connection structures may be adopted as needed. In addition, the number and arrangement of battery cells 10 are not limited to the structure shown in FIG. 1 and may be changed as needed.

Meanwhile, the arranged battery cells 10 may be accommodated in a housing. The housing may include a pair of end plates 61 and 62 facing a large surface of the battery cell 10, a side plate 63 connected to the pair of end plates 61 and 62, and a bottom plate (not shown).

The side plate 63 may support a side surface of the battery cell 10, and the bottom plate (not shown) may support a bottom surface of the battery cell 10. In addition, the pair of end plates 61 and 62, the side plate 63, and the bottom plate 64 may be coupled by means of a member, such as a bolt, but is not limited thereto, and any method that may be used for fastening may be used.

Meanwhile, the battery module 100 may further include a holder 110 positioned on the battery cells 10 and accommodating the bus bars 120, a cover portion 130 positioned on the holder 110 and covering the bus bars 120, and an upper cover 150 coupled to the housing to accommodate the battery cells 10, the holder 110, and the cover portion 130. The housing may be coupled to the upper cover 150 using a fastening member, such as a bolt, but is not limited thereto, and any method that may be used for fastening may be used. That is, the housing may be coupled to the upper cover 150 to form an internal space, and the battery cells 10, the holder 110, and the cover portion 130 may be accommodated in the internal space.

Therefore, the inventors have recognized that it is advantageous for materials of the housing and the upper cover 150 to be materials that may protect the battery cells 10, the holder 110, and the cover portion 130 from mechanical shock or thermal shock. The materials of the housing and the upper cover 150 may include, but are not limited to, at least one of acrylonitrile butadiene styrene (ABS), polycarbonate (PC), polypropylene (PP), aluminum, or stainless steel.

Meanwhile, the holder 110 may be positioned on the battery cells 10 and accommodate the bus bars 120. In addition, the holder 110 may include a sensing unit that performs various protective functions to improve the stability and lifespan of the battery module 100. For example, the sensing unit may be connected to a battery management system (BMS). Each of the bus bars 120 may be equipped with a terminal for temperature measurement and/or a terminal for voltage measurement, and the measured information may be transferred to the sensing unit through wiring and managed in an integrated manner. Meanwhile, each of the plurality of battery cells 10 may include the vent 13 as a gas discharge passage at the top, and the holder 110 may further include holes 113 overlapping the vents 13. The holes 113 may be discharge passages for high-temperature gas released when the temperature of the battery cell 10 increases and high-temperature gas is released through the vent 13.

Meanwhile, the cover portion 130 may be positioned on the holder 110 and may cover the bus bars 120. The cover portion 130 may cover the bus bars 120 spaced apart from each other as a whole, as shown in FIG. 1.

When the battery module 100 includes the cover portion 130, the cover portion 130 may protect the bus bars 120 from mechanical impact and prevent the bus bars 120 from being short-circuited, thereby improving the stability of the battery module.

In more detail, when the battery module 100 experiences thermal runaway, foreign matter may be present inside the battery module 100. For example, the foreign matter may be a fragment of the battery cell 10 which is destroyed, and the fragment may be a conductive material included in the battery cell 10. In addition, the upper cover 150 may be destroyed during a thermal runaway, and fragments of the upper cover 150 may also include a conductive material. In the event of thermal runaway of the battery module 100, the cover portion 130 may cover the bus bars 120 to prevent the bus bars 120 from coming into contact with the fragments described herein, thereby preventing the bus bars 120 from being short-circuited and causing additional secondary thermal runaway.

Meanwhile, the cover portion 130 may include a plurality of cover portions 130a and 130b spaced apart from each other. The holes 113 of the holder 110 may be exposed between the cover portions 130a and 130b being spaced apart from each other. When the cover portions 130a and 130b expose the holes 113, a discharge passage for high-temperature gas may be formed when the temperature of the battery cell 10 increases and the high-temperature gas is discharged to the vent 13, thereby improving the stability of the battery module 100. In FIG. 1, the cover portion 130 is illustrated as two cover portions 130a and 130b, but the number of cover portions 130 is not limited to two and may be changed as desired.

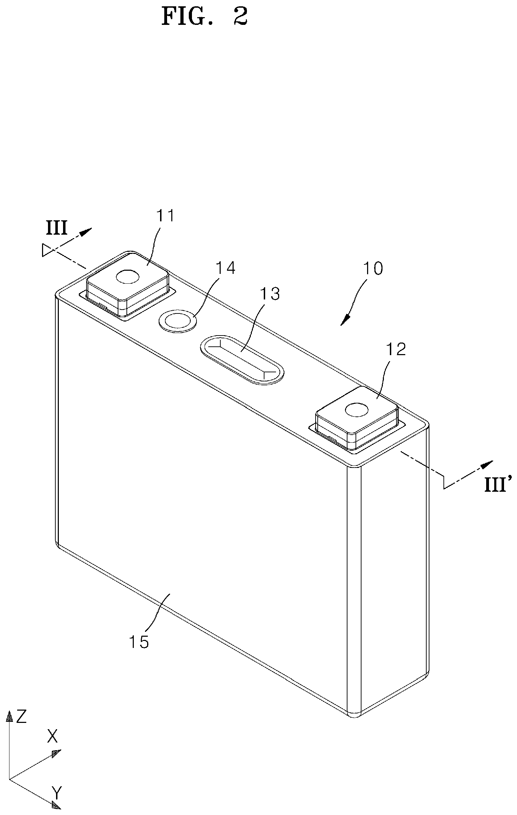

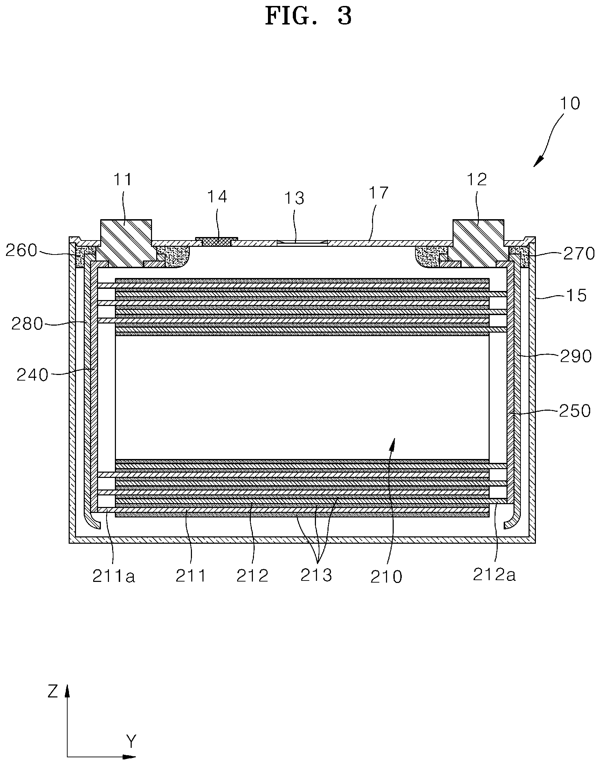

FIG. 2 is a perspective view schematically illustrating an example of the battery cell 10 of the battery module 100 of FIG. 1, and FIG. 3 is a cross-sectional view schematically illustrating an example of a cross-section taken along line III-III' of FIG. 2.

Referring to FIGS. 2 and 3 together, the battery cell 10 according to the present embodiment may include at least one electrode assembly 210 formed by winding a positive electrode 211 and a negative electrode 212 together with a separator 213 as an insulator therebetween and a case 15 in which the electrode assembly 210 is housed. The battery cell 10 according to the present embodiment is described as a prismatic lithium ion battery cell as an example. However, the present disclosure is not limited thereto, and the present disclosure may be applied to various types of battery cells, such as lithium polymer battery cells or cylindrical battery cells.

The positive electrode 211 and the negative electrode 212 may include a coated portion, which is a region in which an active material is applied to a current collector formed of a metal foil of a thin plate and positive and negative uncoated portions 211a and 212a, which are regions in which the active material is not applied.

The positive electrode 211 and the negative electrode 212 are wound with the separator 213, which is an insulator, positioned therebetween. However, the present disclosure is not limited thereto, and the electrode assembly 210 described herein may have a structure in which a positive electrode and a negative electrode formed of a plurality of sheets are alternately stacked with a separator therebetween.

The case 15 forms the overall appearance of the battery cell 10 and may include a conductive metal, such as aluminum, an aluminum alloy, or nickel-plated steel. In addition, the case 15 may provide a space in which the electrode assembly 210 is accommodated.

The battery cell 10 may include a cap plate 17 covering an opening of the case 15, and the case 15 and the cap plate 17 may include a conductive material. Here, the first terminal 11 and the second terminal 12 electrically connected to the positive electrode 211 or the negative electrode 212 may be installed to protrude outwardly by penetrating the cap plate 17.

In addition, outer circumferential surfaces of upper pillars of the first terminal 11 and the second terminal 12 protruding outwardly from the cap plate 17 may be threaded and fixed to the cap plate 17 with a nut.

However, the present disclosure is not limited thereto, and the first terminal 11 and the second terminal 12 may be formed of a rivet structure and may be riveted or may be welded to the cap plate 17.

In addition, the cap plate 17 may be formed of a thin plate and may be coupled to the opening of the case 15, an electrolyte injection port 14 into which a sealing plug may be installed may be formed in the cap plate 17, and the vent 13 having a notch may be installed.

The first terminal 11 and the second terminal 12 may be electrically connected to a current collector including first and second current collectors 240 and 250 (hereinafter referred to as positive and negative current collectors, respectively) welded to the positive uncoated portion 211a or the negative uncoated portion 212a.

For example, the first terminal 11 and the second terminal 12 may be respectively coupled to the positive and negative current collectors 240 and 250 by welding. However, the present disclosure is not limited thereto, and the first terminal 11 and the second terminal 12 and the positive and negative current collectors 240 and 250 may be formed integrally. In addition, an insulating member formed of an insulating material may be installed between the electrode assembly 210 and the cap plate 17. Here, the insulating member may include first and second lower insulating members 260 and 270, and each of the first and second lower insulating members 260 and 270 may be installed between the electrode assembly 210 and the cap plate 17.

In addition, according to the present embodiment, one end of a separating member that may be installed to face one surface of the electrode assembly 210 may be installed between the insulating member and the first terminal 11 and the second terminal 12. Here, the separating member may include first and second separating members 280 and 290.

Accordingly, one end of each of the first and second separating members 280 and 290 that may be installed to face one surface of the electrode assembly 210 may be installed between the first and second lower insulating members 260 and 270 and the first terminal 11 and the second terminal 12.

Finally, the first terminal 11 and the second terminal 12 welded to the positive and negative current collectors 240 and 250 may be coupled to one end of each of the first and second lower insulating members 260 and 270 and the first and second separating members 280 and 290.

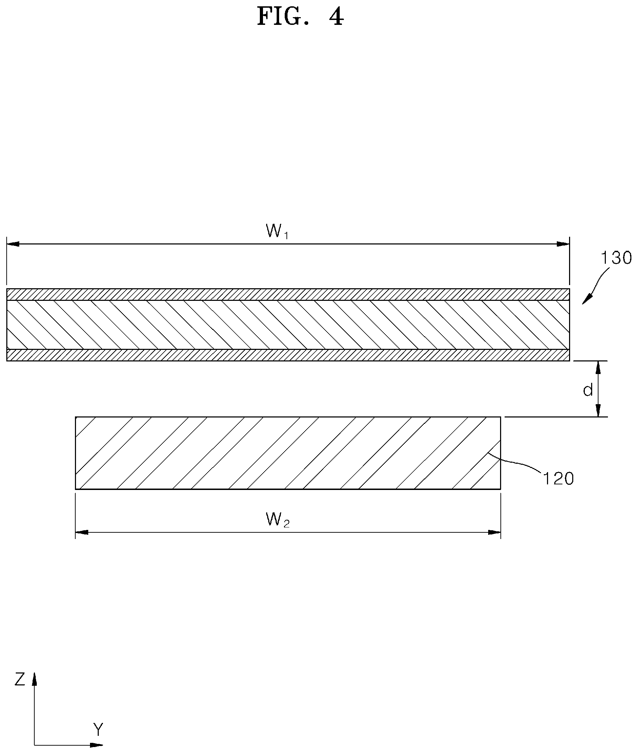

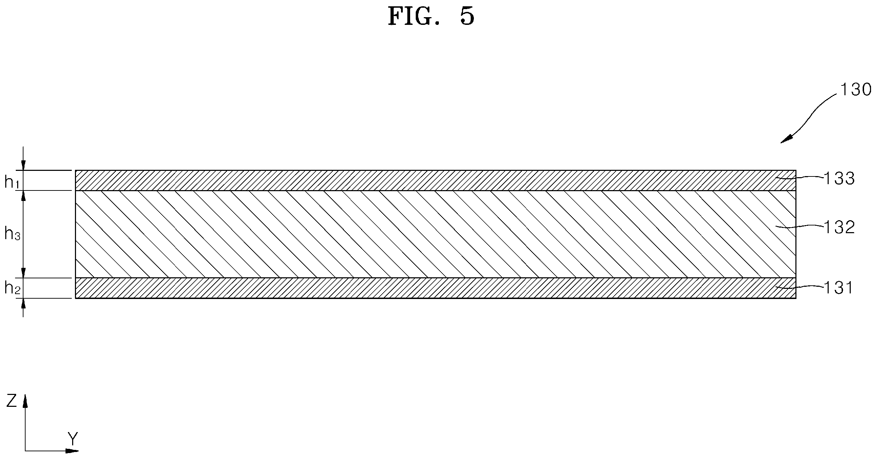

FIG. 4 is a cross-sectional view schematically illustrating an example of the arrangement of the cover portion 130 and the bus bars 120 of the battery module 100 of FIG. 1, and FIG. 5 is a cross-sectional view schematically illustrating an example of the cover portion 130 of the battery module 100 of FIG. 1.

Referring to FIGS. 4 and 5 together with FIG. 1, the cover portion 130 may include a material having excellent insulation performance. In detail, the cover portion 130 may include a first layer 131 including a material having excellent insulation performance, a second layer 132 positioned on the first layer 131, and a third layer 133 positioned on the second layer 132.

The first layer 131 and the third layer 133 of the cover portion 130 may include the same material, and the second layer 132 may include a material different from that of the first layer 131 and the third layer 133. In detail, the first layer 131 and the third layer 133 may include at least one of mica, ceramic fiber, glass fiber, or silica fiber, and the second layer 132 may include at least one of aerogel, polyurethane foam, or phenol foam.

Meanwhile, if thermal runaway occurs in the battery module 100, foreign matter may be present inside the battery module 100. For example, the foreign matter may be a fragment of the battery cell 10 that is destroyed, and the fragment may be a conductive material included in the battery cell 10. In addition, the upper cover 150 may be destroyed during thermal runaway, and fragments of the upper cover 150 may also include a conductive material. Such fragments may have a high temperature.

The first layer 131 of the cover portion 130 is positioned adjacent to the bus bars 120, and the third layer 133 is positioned adjacent to the upper cover 150. Accordingly, the first layer 131 and the third layer 133 may be first exposed to a hot conductive fragment occurring during thermal runaway of the battery module 100.

Mica, ceramic fiber, glass fiber, and silica fiber are materials having excellent electrical insulation and durability and low thermal conductivity, and thus, when the first layer 131 and the third layer 133 include at least one of the mica, ceramic fiber, glass fiber, or silica fiber, the conductive fragments and the bus bars 120 may be prevented from coming into contact with each other and causing a short-circuit due to the excellent insulation performance, and the mechanical strength of the cover portion 130 may increase due to the excellent durability, thereby preventing the cover portion 130 from being damaged. In addition, due to low thermal conductivity, the thermal energy of hot fragments may be prevented from spreading to the surroundings.

Aerogel, polyurethane foam, and phenol foam are materials with excellent insulation performance. Therefore, when the second layer 132 positioned between the first layer 131 and the third layer 133 of the cover portion 130 includes at least one of aerogel, polyurethane foam, or phenol foam, heat diffusion to the surroundings during thermal runaway of the battery module may be effectively prevented.

That is, when the cover portion 130 is formed to include a plurality of layers such that the first layer 131 and the third layer, which may come into contact with fragments occurring during thermal runaway, include at least one of mica, ceramic fiber, glass fiber, or silica fiber having excellent electrical insulation, durability, and heat insulating performance and the second layer 132 positioned between the first layer 131 and the third layer 133 includes at least one of aerogel, polyurethane foam, or phenol foam having excellent heat insulating performance, the conductive fragments and the bus bars 120 may be prevented from contacting each other to cause a short circuit, and thermal energy of hot fragments may be efficiently prevented from being transmitted to the surroundings, thereby improving the stability of the battery module 100.

Meanwhile, at least one of the aerogel, the polyurethane foam, or the phenol foam of the second layer 132 of the cover portion 130 may be included in the second layer by 60 wt% to 90 wt%. If at least one of the aerogel, the polyurethane foam, or the phenol foam is included in the second layer by less than 60 wt%, there is a concern that the insulation performance of the cover portion 130 may be reduced, and if at least one of the aerogel, the polyurethane foam, or the phenol foam is included in the second layer by more than 90 wt%, there is a concern that the material may be wasted.

Meanwhile, mica, ceramic fiber, glass fiber, and silica fiber that may be included in the first layer 131 and the third layer 133 may have excellent insulation performance and physical durability even when used thinly. Meanwhile, aerogel, polyurethane foam, and phenol foam that may be included in the second layer 132 may have excellent insulating performance, although they are more brittle than mica, ceramic fiber, glass fiber, and silica fiber. Therefore, in order to maximize the insulation performance and durability of the cover portion 130 within a determined thickness range of the cover portion 130, a thickness of the second layer 132 may be greater than thicknesses of the first layer 131 and the third layer 133.

Accordingly, the thicknesses h2 and h1 of the first layer 131 and the third layer 133 of the cover portion 130 may be 0.1 mm to 0.3 mm. In addition, the thickness h3 of the second layer of the cover portion 130 may be 0.5 mm to 2 mm.

If the thickness of the first layer 131 and the third layer 133 is less than 0.1 mm and the thickness of the second layer 132 is less than 0.5 mm, there is a concern that the durability, insulation, and heat insulation performance of the cover portion 130 may be reduced, and if the thickness of the first layer 131 and the third layer 133 is more than 0.3 mm and the thickness of the second layer 132 is more than 2 mm, the cover portion 130 may become excessively thick, which may reduce space efficiency and cause waste of materials.

Meanwhile, even if the electrical insulation of the cover portion 130 is excellent, if used for a long period of time, the cover portion 130 may deteriorate, absorb moisture, or become contaminated, thereby creating a path through which current may flow. In this case, the cover portion 130 may come into contact with the bus bars 120, causing a short-circuit and a fire.

Therefore, the cover portion 130 may be provided apart from the bus bars 120. Accordingly, the cover portion 130 may be coupled to the upper cover 150, and a distance d between upper surfaces of the bus bars 120 and a lower surface of the cover portion 130 may be 0.1 mm to 5 mm.

If the distance d between the upper surface of the bus bar 120 and the lower surface of the cover portion 130 is less than 0.1 mm, a path through which current may flow to the cover portion 130 may be created due to deterioration, moisture absorption, or contamination of the cover portion 130, and if a mechanical impact, etc. is applied to the battery module 100, the distance d between the upper surface of the bus bar 120 and the lower surface of the cover portion 130 may be short, so that the bus bar 120 may come into contact with the cover portion 130 to cause a short-circuit. In addition, if the distance d between the upper surface of the bus bar 120 and the lower surface of the cover portion 130 exceeds 5 mm, the integration density of the battery module 100 may decrease. Meanwhile, because the bus bar 120 is spaced apart from the cover portion 130, an air layer including air may be formed in the space between the bus bar 120 and the cover portion 130.

Because air has low thermal conductivity and low electrical conductivity, the air layer may have excellent heat insulation and insulating effects. For example, the thermal conductivity of air at room temperature is 0.024 W/(m K), and the electrical conductivity of air is 10⁻¹⁴ (S/m). Therefore, when the battery module 100 includes the air layer, heat transfer may be prevented more efficiently if thermal runaway of the battery module 100 occurs.

In addition, as described herein, the cover portion 130 may deteriorate, absorb moisture, or become contaminated, thereby creating a passage through which current may flow.

However, because the air layer is an excellent electrical insulating layer, the current of the bus bar 120 may be prevented from flowing to the cover portion 130, thereby improving the stability of the battery module 100.

As described herein, if thermal runaway occurs in the battery module 100, foreign matter may occur inside the battery module 100. For example, the foreign matter may be a fragment of the battery cell 10 which is destroyed, and the fragment may be a high-temperature conductive material included in the battery cell 10. In addition, the upper cover 150 may be destroyed during thermal runaway, and a fragment of the upper cover 150 may also include a high-temperature conductive material.

Because the cover portion 130 is configured to protect the bus bars 120 from the aforementioned fragment, a width W1 of the cover portion 130 may be greater than a width W2 of the bus bars 120. Here, the width W1 of the cover portion 130 and the width W2 of the bus bar 120 refer to lengths measured in a direction Y perpendicular to the arrangement direction X of the battery cells.

If the width W1 of the cover portion 130 is less than or equal to the width W2 of the bus bar 120, the cover portion 130 may not properly cover the bus bars 120, and thus there is a concern that the aforementioned fragments may come into contact with the bus bars 120, causing a short-circuit and additional thermal runaway.

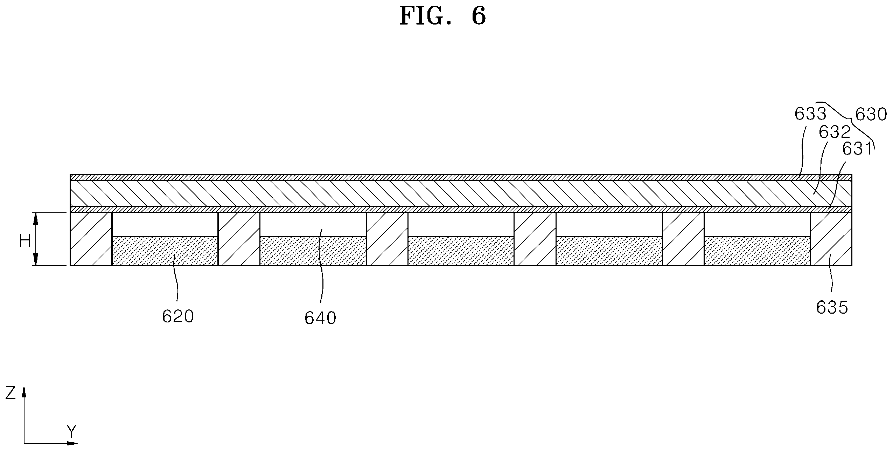

FIG. 6 is a cross-sectional view schematically illustrating another example of the arrangement of a cover portion 630 and bus bars 620 of the battery module of FIG. 1.

Referring to FIG. 6 together with FIG. 1, the battery module 100 according to another embodiment of the present disclosure may further include the holder 110 positioned on the battery cells 10 and accommodating the bus bars 620, the cover portion 630 positioned on the holder 110 and covering the bus bars 620, and the upper cover 150 coupled to the housing to accommodate the battery cells 10, the holder 110, and the cover portion 630.

The cover portion 630 may include a first layer 631 including a material having excellent insulation performance, a second layer 632 positioned on the first layer 631, and a third layer 633 positioned on the second layer 632.

In addition, the first layer 631 and the third layer 633 of the cover portion 630 may include the same material, and the second layer 632 may include a different material from that of the first layer 631 and the third layer 633. In detail, the first layer 631 and the third layer 633 may include at least one of mica, ceramic fiber, glass fiber, or silica fiber, and the second layer 632 may include at least one of aerogel, polyurethane foam, or phenol foam. The cover portion 630 may further include a protrusion 635 protruding toward the battery cells 10. The protrusions 635 may be individually positioned between any two adjacent bus bars 620 among the bus bars 620. That is, a lower surface of the protrusion 635 may be lower than an upper surface of the bus bar 620.

The protrusion 635 is positioned between the bus bars 620, and therefore needs to be formed of a material that is durable, heat-resistant, insulating, and flexible. Accordingly, the protrusion 635 may include at least one of flame retardant silicone, ethylene propylene diene monomer (EPDM), fluorosilicone, polytetrafluoroethylene (PTFE), para-aramid fiber, fluoroelastomer (FKM), polyvinyl chloride (PVC), or polyurethane.

When the protrusion 635 is placed between the bus bars 620, the bus bars 620 may be secured when movement occurs in the battery module 100 due to external impact, etc. As a result, breakage of a welding region between the bus bars 620 and the battery cells 10 may be prevented.

Meanwhile, if thermal runaway occurs in the battery module 100, foreign matter may occur inside the battery module 100. For example, the foreign matter may be a fragment of the battery cell 10 which is destroyed, and the fragment may be a high-temperature conductive material included in the battery cell 10. In addition, the upper cover 150 may be destroyed during thermal runaway, and fragments of the upper cover 150 may also include a high-temperature conductive material.

When the cover portion 630 includes the protrusions 635 protruding toward the battery cells 10 and the protrusions 635 are individually positioned between any two adjacent bus bars 620 among the bus bars 620, when thermal runaway of the battery module 100 occurs, the protrusions 635 may protect the side surfaces of the bus bars 620, thereby preventing the aforementioned fragments from coming into contact with the bus bars 620 and causing a short-circuit, and preventing heat transfer between the bus bars 620, thereby improving the stability of the battery module 100.

Meanwhile, the cover portion 630 may be located apart from the bus bars 620. Accordingly, an air layer 640 including air may be formed in the space between the bus bar 620 and the cover portion 630.

When the battery module 100 includes the air layer 640, the degree to which heat is transferred and causes additional heat generation in the event of thermal runaway of the battery module 100 may be reduced. In addition, as described herein, the cover portion 630 may deteriorate, absorb moisture, or become contaminated, thereby creating a passage through which current may flow. However, because the air layer 640 is an excellent electrical insulating layer, the air layer 640 may prevent the current of the bus bar 620 from flowing to the cover portion 630.

Meanwhile, a length H of the protrusion 635 may be 2 mm to 4 mm. Because the cover portion 630 is positioned apart from the bus bars 620, if the length H of the protrusion 635 is less than 2 mm, the protrusion 635 may be too short to sufficiently cover the side surfaces of the bus bars 620. In addition, if the length H of the protrusion 635 exceeds 4 mm, the protrusion 635 may become excessively long, which may result in a waste of material.

Meanwhile, in FIG. 6, the protrusion 635 is illustrated as protruding to lower surfaces of the bus bars 620, but without being limited thereto, the protrusion 635 may have any shape as long as the lower surface of the protrusion 635 is positioned lower than the upper surface of the bus bars 620. In addition, in FIG. 6, when the protrusion 635 is positioned between the bus bars 620, there is no empty space between the protrusion 635 and the bus bars 620, but in some embodiments, there may be an empty space between the protrusion 635 and the bus bars 620.

Although the present disclosure has been described herein by means of limited embodiments and drawings, the present disclosure is not limited thereto, and it is obvious that various modifications and variations may be made within the scope of the present disclosure and the equivalent scope of the claims to be described herein by a person skilled in the art to which the present disclosure pertains.

According to embodiments of the present disclosure, because the battery module includes the cover portion that covers the bus bars, the bus bars may be prevented from coming into contact with foreign matter present inside the battery module due to thermal runaway or the like or with a fragment occurring when the upper cover is destroyed due to thermal runaway or the like, to cause a short-circuit, thereby improving the stability of the battery module.

However, the effects obtainable through the present disclosure are not limited to the effects described herein, and other technical effects not mentioned will be clearly understood by those skilled in the art from the description of the disclosure described herein.

## Claims

1. A battery module comprising:
a plurality of battery cells;
busbars electrically connecting the plurality of battery cells;
a holder positioned on the plurality of battery cells and accommodating the bus bars; and
a cover portion positioned on the holder and covering the bus bars,
wherein the cover portion includes a first layer, a second layer positioned on the first layer, and a third layer positioned on the second layer, and
the second layer includes a material different from those of the first layer and the third layer.

2. The battery module of claim 1, wherein the first layer and the third layer each include at least one of mica, ceramic fiber, glass fiber, or silica fiber.

3. The battery module of claim 1 or 2, wherein the second layer includes at least one of aerogel, polyurethane foam, or phenolic foam.

4. The battery module of claim 3, wherein at least one of the aerogel, the polyurethane foam, or the phenol foam is included in the second layer in an amount of 60% to 90% weight.

5. The battery module of any preceding claim, further comprising:
an upper cover covering the cover portion; and
wherein the cover portion is coupled to the upper cover.

6. The battery module of any preceding claim, wherein upper surfaces of the bus bars are spaced apart from a lower surface of the cover portion by a distance.

7. The battery module of any preceding claim, wherein the cover portion further includes protrusions positioned to protrude toward the plurality of battery cells.

8. The battery module of claim 7, wherein each of the protrusions are positioned between respective adjacent bus bars among the bus bars.

9. The battery module of claim 7 or 8, wherein a length of each of the protrusions is 2 mm to 4 mm.

10. The battery module of any preceding claim, wherein:
thicknesses of the first layer and the third layer are each 0.1 mm to 0.3 mm; and
a thickness of the second layer is 0.5 mm to 2 mm.

11. A battery module comprising:
a plurality of battery cells;
busbars electrically connecting the plurality of battery cells; and
a cover portion covering the bus bars,
wherein the cover portion includes a first layer, a second layer positioned on the first layer, and a third layer positioned on the second layer, and
the cover portion includes protrusions positioned protruding toward the plurality of battery cells and between the bus bars.

12. The battery module of claim 11, wherein a lower surface of each of the protrusions is positioned lower than upper surfaces of the bus bars.

13. The battery module of claim 11 or 12, wherein a length of each of the protrusions is 2 mm to 4 mm.

14. The battery module of claim 11, 12 or 13, wherein the protrusions include at least one of flame retardant silicone, ethylene propylene diene monomer (EPDM), fluorosilicone, polytetrafluoroethylene (PTFE), para-aramid fiber, fluoroelastomer (FKM), polyvinyl chloride (PVC), or polyurethane.

15. The battery module of any one of claims 11 to 14, wherein:
thicknesses of the first layer and the third layer are each 0.1 mm to 0.3 mm; and
a thickness of the second layer is 0.5 mm to 2 mm.
